# EUROPEAN PATENT SPECIFICATION

(11) **EP 1 841 049 B1**
(45) Date of publication and mention of the grant of the patent: **15.08.2012**
(21) Application number: 06111810.5
(22) Date of filing: 28.03.2006
(51) Int. Cl.: H02K 35/02

(54) **Electromagnetic micro-generator**
Elektromagnetischer Mikrogenerator
Micro-générateur électromagnétique

(43) Date of publication of application: 03.10.2007
(73) Proprietor: Infineon Technologies AG, 85579 Neubiberg (DE)
(72) Inventor: Kvisteroy, Terje, 3181 Horten (NO)

(56) References cited:
- US-A1- 2004 246 647
- SHEARWOOD C ET AL: "Development of an electromagnetic micro-generator" ELECTRONICS LETTERS, IEE STEVENAGE, GB, vol. 33, no. 22, 23 October 1997 (1997-10-23), pages 1883-1884, XP006008104 ISSN: 0013-5194
- PATENT ABSTRACTS OF JAPAN vol. 1996, no. 02, 29 February 1996 (1996-02-29) -& JP 07 263230 A (TAKESHI IKEDA), 13 October 1995 (1995-10-13)
- WAGNER B ET AL: "Microfabricated actuator with moving permanent magnet" PROCEEDINGS OF THE WORKSHOP ON MICRO ELECTRO MECHANICAL SYSTEMS. INVESTIGATION OF MICRO STRUCTURES, SENSORS, ACTUATORS, MACHINES AND ROBOTS. NARA, JP., JAN. 30 - FEB. 2, 1991, NEW YORK, IEEE, US, vol. WORKSHOP 4, 30 January 1991 (1991-01-30), pages 27-32, XP010039601 ISBN: 0-87942-641-1
- LI W J ET AL: "Infrared signal transmission by a laser-micromachined vibration-induced power generator" CIRCUITS AND SYSTEMS, 2000. PROCEEDINGS OF THE 43RD IEEE MIDWEST SYMPOSIUM ON AUGUST 8-11, 2000, PISCATAWAY, NJ, USA,IEEE, vol. 1, 8 August 2000 (2000-08-08), pages 236-239, XP010558118 ISBN: 0-7803-6475-9
- CHING N N H ET AL: "A laser-micromachined multi-modal resonating power transducer for wireless sensing systems" SENSORS AND ACTUATORS A, ELSEVIER SEQUOIA S.A., LAUSANNE, CH, vol. 97-98, 1 April 2002 (2002-04-01), pages 685-690, XP004361667 ISSN: 0924-4247
- SARAH SCHERRER ET AL: "Energy scavenging Device in LTCC Materials" IEEE WORKSHOP ON MICROELECTRONICS AND ELECTRON DEVICES, 2005, pages 77-78, XP002396419
- S.P. BEEPY ET AL: "DESIGN, FABRICATION AND SIMULATIONS OF MICROELECTROMAGNETIC VIBRATION-POWERED GENERATOR FOR LOW POWER MEMS" DTIP OF MEMS & MOEMS, June 2005 (2005-06), XP002396421
- NEIL N. H. CHING ET AL: "PCB INTEGRATED MICRO-GENERATOR FOR WIRELESS SYSTEMS" PROCEEDINGS OF THE INTERNATIONAL SYMPOSIUM ON SMART STRRUCTURES AND MICROSYSTEMS, October 2000 (2000-10), XP002396422
- PATENT ABSTRACTS OF JAPAN vol. 2003, no. 01, 14 January 2003 (2003-01-14) -& JP 2002 262545 A (TOSHIBA CORP), 13 September 2002 (2002-09-13)
- M. MINO ET AL: "Planar Microtransformer with monolithically-integrated Rectifier Diodes For Micro-Switching Converters" IEEE TRANSACTIONS ON MAGNETICS, vol. 32, no. 2, March 1996 (1996-03), XP002396424

## Description

The present invention relates to a micro-generator for generating useful electrical power from the external environment and a corresponding method of manufacturing a micro generator.

There are currently known many types of devices that require the ability to communicate with other devices. More and more systems using such communicating devices are employing wireless technology so that communication can be carried out without cables or wires.

As wireless technology becomes more widespread, future devices such as sensors, intelligent nodes and remote control systems will rely heavily upon wireless technology to provide them with power as well as for communication purposes.

Micromechanical systems need alternatives to batteries for providing power which meets the miniaturisation requirements of such systems. However, to date there have not been any suitable power supply solutions that are on a small enough scale to be adequately integrated with micro systems. For example, in current systems traditional piezoelectric bulk material may be glued or soldered on to other mechanical members and electrically joined by soldering or a combination of soldering and wire bonding.

"Development of an electromagnetic micro-generator", electronics letters IEE.volume 33, number 22, October 1997, pages 1883 to 1884 discloses a microsensor system with magnetic material applied to produce a microgenerator. JP-A-07263230 discloses a miniature transformer.

The present invention aims to address this problem and to provide a low cost fully integrated micro-generator which is compatible with integrated circuit technology.

According to the present invention there is provided a micro-generator according to claim 1 comprising:
an integrated circuit (IC) wafer;
a microelectromechanical system (MEMS) wafer bonded to the IC wafer, the MEMS wafer comprising a micromechanical element arranged to move in use;
a plurality of first metal coils, the coils being realized as part of the IC wafer and/or the MEMS wafer;
a plurality of trenches formed in the IC wafer and/or the MEMS wafer and associated with the first coils;
a plurality of micro-magnets, a micro-magnet being associated with each trench, wherein the micro-magnets are formed from a magnet layer deposited, plated or bonded to the MEMS wafer and/or the IC wafer;
wherein upon movement of the micromechanical element in use, the micro-magnets are arranged to move within the trenches relative to the first coils such that a voltage is induced in the first coils.

According to the present invention there is further provided a method of manufacturing a micro-generator according to claim 4, the method comprising the steps of:
forming a plurality of first metal coils as part of an integrated circuit (IC) wafer and/or MEMS wafer, the MEMS wafer comprising a micromechanical element arranged to move in use;
forming a plurality of trenches associated with the first coils in the IC wafer and/or MEMS wafer;
depositing or plating or bonding a layer of magnetic material to the MEMS wafer and/or the IC wafer;
etching or abbreviating the magnetic layer to form plurality of micro-magnets, a micro-magnet being associated with each trench;
bonding the MEMS wafer to the IC wafer to define a micro-generator wafer such that in use, on movement of the micromechanical element, the micro-magnets move within the trenches relative to the metal coils such that a voltage is induced in the first coils;
dicing the micro-generator wafer to form individual micro-generators.

According to the present invention there is further provided a micro-transformer for a micro-generator, the transformer comprising:
a plurality of first metal coils and a plurality of second metal coils associated with the first coils, the first and second coils being realized as part of an lC or MEMS wafer, a first voltage being induceable in the first coils in use by the micro-generator;
magnetic material realized as part of an lC or MEMS wafer;
wherein the coils and magnetic material are arranged such that a first voltage induced in use in the first coils causes a second voltage to be induced in the second coils, wherein the second voltage is larger than the first voltage.

Examples of the present invention will now be described with reference to the accompanying drawings, in which:
Figure 1 is a micro-generator according to an example of the present invention;
Figures 2A to 2C are examples of different coil and magnet arrangements possible in the micro-generator shown in figure 1; and
Figures 3A and 3B are an example transformers according to the present invention.

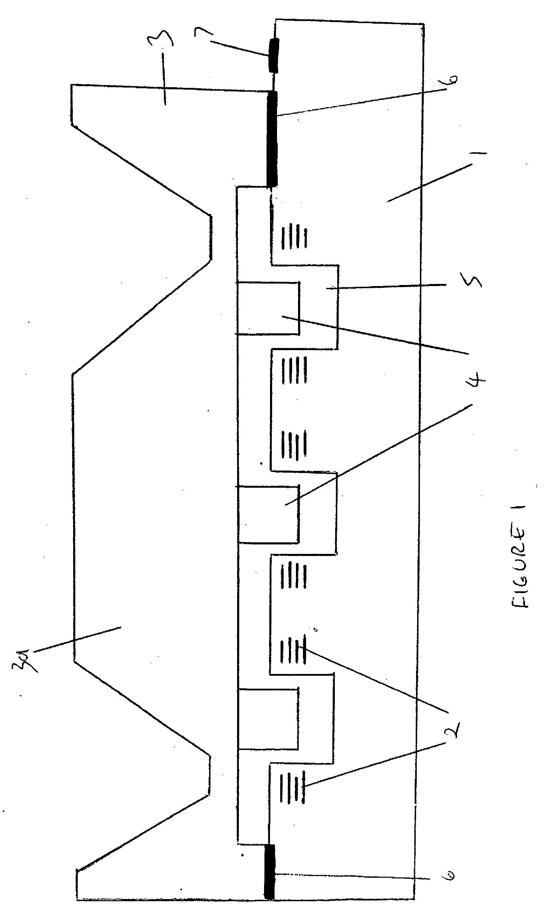

Referring to claim 1, an example micro-generator according to the present invention comprises an integrated circuit (IC) chip 1 with a plurality of metal micro-coils 2 within the chip 1. The coils 2 are realised as part of the IC chip 1 and are serially coupled. The micro-generator also comprises a microelectromechanical system (MEMS) chip 3 which includes an energy pick-up such as a mass-spring system 3a or a diaphragm (not shown). A plurality of micro-magnets 4 are formed on the MEMS chip 3 and a plurality of trenches 5 are formed in the IC chip 1 to accommodate the magnets 4. The coils 2 and magnets 4 are positioned within the IC chip 1 in such a way that the magnets 4 can move within the trenches 5 close to the coils 2 to induce a current in the coils 2. In the example shown, the magnets 4 surround the trenches 5. The MEMS chip 3 and IC chip 1 are bonded together at the bond regions 6 shown in figure 1. Bond pads 7 are formed on the IC chip 1.

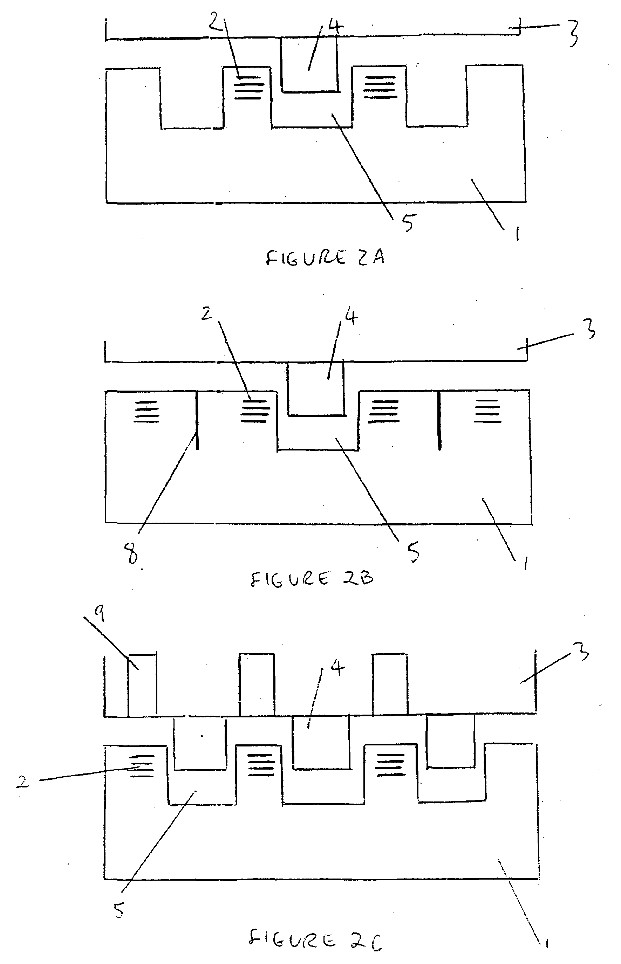

Figures 2A to 2C show alternative coil 2, magnet 4 and trench 5 arrangements to that shown in figure 1. In figure 2A a magnet 4 is isolated by means of an empty trench 5 either side of the trench 5 occupied by the magnet 4. This helps reduce parasitics and other losses. In figure 2B losses are reduced by means of metal shields 8 in between coils 2. In figure 2C losses are reduced by means of further trenches 9 formed in the MEMS chip 3 adjacent to coils 2.

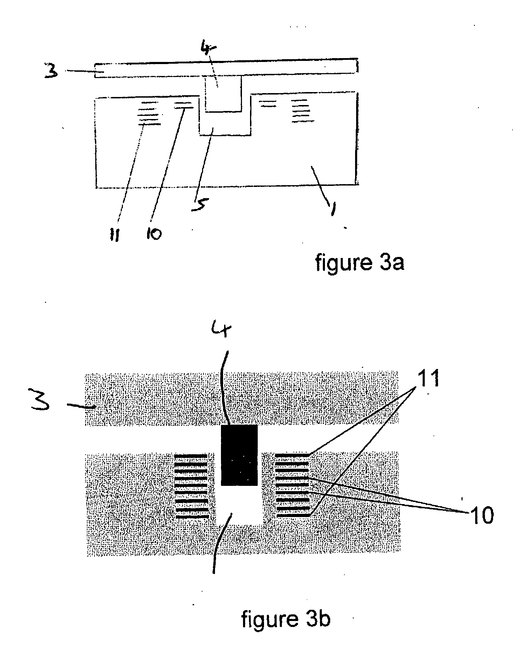

Referring to figure 3A, an example micro-transformer according to the present invention has the same form as the micro-generator described above. An example magnet 4 is shown which is accommodated in a trench 5 such that the magnet 4 can move within the trench 5. A set of primary coils 10 surround the magnet 4 and a set of secondary coils 11 surround the primary coils 10, the secondary coils 11 having more turns than the primary coils. In this way the voltage generated by a micro-generator can be increased to a level required for the application to be powered by the micro-generator. Figure 3B shows an alternative arrangement of the example of figure 3A. In this arrangement there is still provided a set of primary coils 10 and a set of secondary coils 11, although the two are positioned above one another and interlaced. Generally, the primary coil 10 will have fewer turns (layers) than the secondary coil 11, although the actual number and relative proportions of primary and secondary coils will be dependent upon the particular application and the voltage transformation that is required. Such micro-transformers can be used in conjunction with a micro-generator according to the present invention. The transformer can be placed very close to the voltage to be increased to minimise losses.

The micro-generator of the present invention, preferably in combination with the micro-transformer of the preset invention, can be used in systems in environments experiencing mechanical vibrations or other dynamic mechanical loads. The micro-generator extracts power from the environment by using the relative motion of magnets 4 and coils 2 caused by the mechanical load. In operation of the example shown in figure 1, the mass-spring system 3a which is the energy pick-up moves as a result of an external mechanical load and so causes the magnets 4 to move within the trenches 5 to induce a current in the coils 2. If the transformer of figures 3A and B is used, a current is induced in the primary coils 10 which is increased by the secondary coils 11.

The energy pick-up 3a has a large sensitivity and moves like a large stiff body which ensures both a large amplitude and the same phase for power generation in each of the serially coupled coils 2.

The example micro-generator shown in figure 1 is manufactured by making the serially coupled coils 2 from aluminium or copper in an IC wafer by using the advanced multilayer IC process. Trenches 5 are then made in the IC wafer by means of deep reactive ion etching (DRIE) to allow for magnets 4 to move near the coils 2. A thin film layer of magnetic material such as NiFe8l/19 is formed on a MEMS wafer, for example by sputtering or electroplating. This is patterned and etched to form the micro-magnets 4. The MEMS wafer includes the energy pick-ups. The MEMS wafer is then bonded to the IC wafer and the resulting wafer is diced to form micro-generators as shown in figure 1.

The invention makes use of "large" mechanical members for the energy pick-up, such as inertia masses 3a and diaphragms, to maximise energy pick-up, but these are still used at the die level by using the approach of combining MEMS and lC technology. As standard complementary metal oxide semiconductor (CMOS) or Biplor CMOS (BiCMOS) IC technology is part of the micro-generation system, combining the micro-generator with a device to be powered is straightforward and low cost.

## Claims

1. A micro-generator comprising:
an integrated circuit (IC) wafer (1);
a microelectromechanical system (MEMS) wafer (3) bonded to the IC wafer, the MEMS wafer comprising a micromechanical element arranged to move in use;
a plurality of first metal coils (2), the coils being realized as part of the lC wafer and/or the MEMS wafer;
a plurality of trenches (5) formed in the IC wafer and/or the MEMS wafer and associated with the first coils which surround the trenches;
a plurality of micro-magnets (4), a micro-magnet being associated with each trench, wherein the micro-magnets are formed from a magnet layer deposited, plated or bonded to the MEMS wafer and/or the IC wafer;
wherein upon movement of the micromechanical element in use, the micromagnets are arranged to move within the trenches relative to the first coils such that a voltage is induced in the first coils.

2. A micro-generator according to claim 1, further comprising isolation means arranged to isolate adjacent micro-magnets in use.

3. A microgeneration system comprising a micro-generator according to claim 1 or claim 2 and a transformer comprising:
a plurality of first metal coils (10) and a plurality of second metal coils (11) associated with the first coils, the first and second coils being realized as part of an IC or MEMS wafer, a first voltage being induceable in the first coils in use by the micro-generator;
and magnetic (4) material realized as part of an IC or MEMS wafer;
wherein the coils surround the magnetic material such that a first voltage induced in use in the first coils causes a second voltage to be induced in the second coils, wherein the second voltage is larger than the first voltage.

4. A method of manufacturing a micro-generator, the method comprising the steps of:
forming a plurality of first metal coils (2) as part of an integrated circuit (IC) wafer (1) and/or MEMS wafer, the MEMS wafer comprising a micromechanical element (3) arranged to move in use;
forming a plurality of trenches (5) associated with the first coils which surround the trenches in the IC wafer and/or MEMS wafer;
forming a layer of magnetic material (4) on the MEMS wafer and/or the IC wafer;
forming a plurality of micro-magnets from the magnetic layer, a micro-magnet being associated with each trench;
wherein the layer of magnetic material (4) is formed by deposition, plating or bonding.
bonding the MEMS wafer to the IC wafer to define a micro-generator wafer such that in use, on movement of the micromechanical element, the micro-magnets move within the trenches relative to the metal coils such that a voltage is induced in the first coils; and
dicing the micro-generator wafer to form individual micro-generators.

5. A method of manufacturing a micro-generator according to claim 4, wherein the plurality of first metal coils (2) are formed in the IC wafer by a multilayer IC process.

6. A method of manufacturing a micro-generator according to claim 4 or claim 5, wherein the trenches (5) are formed by deep reactive ion etching.

7. A method of manufacturing a micro-generator according to any of claims 4 to 6, wherein the micro-magnets are forming by etching or abbreviating the magnetic layer.

## Patentansprüche

1. Mikrogenerator, der Folgendes umfasst:
einen Wafer (1) einer integrierten Schaltung (IC-Wafer);
einen Wafer (3) eines mikroelektromechanischen Systems (MEMS-Wafer), der mit dem IC-Wafer verbunden ist,
wobei der MEMS-Wafer ein mikromechanisches Element umfasst, das dafür ausgelegt ist, sich in Verwendung zu bewegen;
mehrere erste Metallspulen (2), wobei die Spulen als Teil des IC-Wafers und/oder des MEMS-Wafers verwirklicht sind;
wobei in dem IC-Wafer und/oder in dem MEMS-Wafer mehrere Gräben (5) ausgebildet sind und den ersten Spulen, die die Gräben umgeben, zugeordnet sind;
mehrere Mikromagnete (4), wobei jedem Graben ein Mikromagnet zugeordnet ist, wobei die Mikromagnete aus einer abgelagerten Magnetschicht gebildet, plattiert oder mit dem MEMS-Wafer und/oder mit dem IC-Wafer verbunden sind;
wobei die Mikromagneten so ausgelegt sind, dass sie sich bei Bewegung des mikromechanischen Elements in Verwendung innerhalb der Gräben relativ zu den ersten Spulen in der Weise bewegen, dass in den ersten Spulen eine Spannung induziert wird.

2. Mikrogenerator nach Anspruch 1, der ferner Isolationsmittel umfasst, die zum Isolieren angrenzender Mikromagneten in Verwendung ausgelegt sind.

3. Mikroerzeugungssystem, das einen Mikrogenerator nach Anspruch 1 oder Anspruch 2 und einen Transformator umfasst, der Folgendes umfasst:
mehrere erste Metallspulen (10) und mehrere zweite Metallspulen (11), die den ersten Spulen zugeordnet sind, wobei die ersten und die zweiten Spulen als Teil eines IC- oder MEMS-Wafers verwirklicht sind, wobei in den ersten Spulen in Verwendung durch den Mikrogenerator eine erste Spannung induziert werden kann;
ein magnetisches Material (4), das als Teil eines IC- oder MEMS-Wafers verwirklicht ist;
wobei die Spulen das magnetische Material in der Weise umgeben, dass eine in Verwendung in den ersten Spulen induzierte erste Spannung veranlasst, dass in den zweiten Spulen eine zweite Spannung induziert wird, wobei die zweite Spannung höher als die erste Spannung ist.

4. Verfahren zum Herstellen eines Mikrogenerators, wobei das Verfahren die folgenden Schritte umfasst:
Ausbilden mehrerer erster Metallspulen (2) als Teil eines Wafers (1) einer integrierten Schaltung (IC-Wafers) und/oder eines MEMS-Wafers, wobei der MEMS-Wafer ein mikromechanisches Element (3) umfasst, das dafür ausgelegt ist, sich in Verwendung zu bewegen;
Ausbilden mehrerer Gräben (5), die den ersten Spulen, die die Gräben in dem IC-Wafer und/oder in dem MEMS-Wafer umgeben, zugeordnet sind;
Ausbilden einer Schicht aus einem magnetischen Material (4) auf dem MEMS-Wafer und/oder auf dem IC-Wafer;
Ausbilden mehrerer Mikromagneten aus der magnetischen Schicht, wobei jedem Graben ein Mikromagnet zugeordnet ist;
wobei die Schicht aus magnetischem Material (4) durch Ablagerung, Plattieren oder Verbinden ausgebildet wird;
Verbinden des MEMS-Wafers mit dem IC-Wafer, um einen Mikrogeneratorwafer zu definieren, in der Weise, dass sich in Verwendung bei Bewegung des mikromechanischen Elements die Mikromagneten innerhalb der Gräben relativ zu den Metallspulen in der Weise bewegen, dass in den ersten Spulen eine Spannung induziert wird; und
Trennen des Mikrogeneratorwafers zum Ausbilden einzelner Mikrogeneratoren.

5. Verfahren zum Herstellen eines Mikrogenerators nach Anspruch 4, wobei die mehreren ersten Metallspulen (2) in dem IC-Wafer durch einen Mehrschicht-IC-Prozess ausgebildet werden.

6. Verfahren zum Herstellen eines Mikrogenerators nach Anspruch 4 oder Anspruch 5, wobei die Gräben (5) durch tief reaktives Ionenätzen ausgebildet werden.

7. Verfahren zum Herstellen eines Mikrogenerators nach einem der Ansprüche 4 bis 6, wobei die Mikromagneten durch Ätzen oder Verkürzen der Magnetschicht ausgebildet werden.

## Revendications

1. Micro-générateur comprenant :
une tranche (1) de circuit intégré (IC) ;
une tranche (3) de système microélectromécanique (MEMS) reliée à la tranche d'IC, la tranche de MEMS comprenant un élément micromécanique monté de manière à se déplacer en utilisation ;
une pluralité de premières bobines (2) métalliques, les bobines étant réalisées en tant que partie de la tranche d'IC et/ou de la tranche de MEMS ;
une pluralité de sillons (5) formés dans la tranche d'IC et/ou dans la tranche de MEMS et associés aux premières bobines qui entourent les sillons ;
une pluralité de micro-aimants (4), un micro-aimant étant associé à chaque sillon, les micro-aimants étant formés en une couche d'aimant déposée, plaquée ou reliée à la tranche de MEMS et/ou à la tranche d'IC ;
dans lequel, après déplacement de l'élément micromécanique en utilisation, des micro-aimants sont montés de manière à se déplacer dans les sillons par rapport aux premières bobines, de manière à induire une tension dans les premières bobines.

2. Micro-générateur suivant la revendication 1, comprenant, en outre, des moyens isolants montés de manière à isoler des micro-aimants voisins en utilisation.

3. Système de microgénération, comprenant un micro-générateur suivant la revendication 1 ou la revendication 2, et un transformateur comprenant :
une pluralité de premières bobines (10) métalliques et une pluralité de deuxièmes bobines (11) métalliques associées aux premières bobines, les premières et deuxièmes bobines étant réalisées en tant que partie d'une tranche d'IC ou d'une tranche de MEMS, une première tension pouvant être induite dans les premières bobines en utilisation par le micro-générateur ;
et du matériau magnétique (4) réalisé en tant que partie d'une tranche d'IC ou de MEMS ;
dans lequel les bobines entourent le matériau magnétique, de manière à ce qu'une première tension induite en utilisation dans les premières bobines fait qu'une deuxième tension est induite dans les deuxièmes bobines, la deuxième tension étant plus haute que la première tension.

4. Procédé de fabrication d'un micro-générateur, le procédé comprenant les stades dans desquels :
on forme une pluralité de premières bobines (2) métalliques en tant que partie d'une tranche (1) de circuit intégré (IC) et/ou d'une tranche de MEMS, la tranche de MEMS comprenant un élément (3) micromécanique monté de manière à se mouvoir en utilisation ;
on forme une pluralité de sillons (5) associés aux premières bobines qui entourent les sillons de la tranche d'IC et/ou de la tranche de MEMS ;
on forme une couche de matériau (4) magnétique sur la tranche de MEMS et/ou sur la tranche d'IC ;
on forme une pluralité de micro-aimants à partir de la couche magnétique, un micro-aimant étant associé à chaque sillon ;
dans lequel la couche de matériau (4) magnétique est formée par dépôt, plaquage ou liaison ;
on relie la tranche de MEMS à la tranche d'IC pour définir une tranche de micro-générateur, tel que, en utilisation par déplacement de l'aimant micromécanique, les micro-aimants se déplacent dans les sillons par rapport aux bobines métalliques, de manière à induire une tension dans les premières bobines ; et
on découpe la tranche de micro-générateur pour former des micro-générateurs individuels.

5. Procédé de fabrication d'un micro-générateur suivant la revendication 4, dans lequel on forme la pluralité de premières bobines (2) métalliques dans la tranche d'IC par une opération d'IC à couches multiples.

6. Procédé de fabrication d'un micro-générateur suivant la revendication 4 ou la revendication 5, dans lequel on forme les sillons (5) par une attaque profonde par ion réactif.

7. Procédé de fabrication d'un micro-générateur suivant l'une quelconque des revendications 4 à 6, dans lequel on forme les micro-aimants en attaquant ou en tronquant la couche magnétique.
